# EUROPÄISCHE PATENTSCHRIFT

(11) **EP 1 658 336 B1**
(45) Veröffentlichungstag und Bekanntmachung des Hinweises auf die Patenterteilung: **22.11.2006**
(21) Anmeldenummer: 04763775.6
(22) Anmeldetag: 04.08.2004
(51) Int. Cl.: C09B 67/00

(54) **MISCHKRISTALLE MIT DERIVATEN VON C.I. PIGMENT RED 170**
MIXED CRYSTALS COMPRISING CI PIGMENT RED 170 DERIVATIVES
CRISTAUX MIXTES A BASE DE DERIVES DU PIGMENT ROUGE CI No 170

(30) Priorität: 19.08.2003 DE 10338059
(43) Veröffentlichungstag der Anmeldung: 24.05.2006
(73) Patentinhaber: Clariant Produkte (Deutschland) GmbH, 65929 Frankfurt am Main (DE)
(72) Erfinder: SCHMIDT, Martin, U., 65931 Frankfurt am Main (DE); METZ, Hans, Joachim, 64285 Darmstadt (DE); WACKER, Andreas, 68165 Mannheim (DE)
(74) Vertreter: Hütter, Klaus
(86) Internationale Anmeldenummer: PCT/EP2004/008724
(87) Internationale Veröffentlichungsnummer: WO 2005/019346

(56) Entgegenhaltungen:
- DE-A- 2 043 482
- DE-A- 10 224 279
- DE-B- 1 228 731

## Beschreibung

Die vorliegende Erfindung betrifft neue Mischkristalle auf der Basis von C.I. Pigment Red 170 und Derivaten davon, sowie Verfahren zu deren Herstellung.

C.I. Pigment Red 170 (Formel (1), X = H) ist in DE 1 228 731 beschrieben. Die alpha-, beta- und gamma-Phase werden in DE 2 043 482 beschrieben.
C.I. Pigment Red 170 hat in Lacken und Kunststoffen gute, aber nicht einwandfreie Licht- und Wetterechtheiten.
Es sind einige Mischkristalle mit.C.I. Pigment Red 170 beschrieben. Beispielsweise ist ein Mischkristall aus C.I. Pigment Red 170 und C.I. Pigment Red 266 (das eine Methoxy- statt der Ethoxy-Gruppe enthält) als "C.I. Pigment Red 210" bekannt.
C.I. Pigment Red 210 hat jedoch eine schlechtere Licht- und Wetterechtheit als C.I. Pigment Red 170 selbst.

Ziel der vorliegenden Erfindung war es, Azorotpigmente herzustellen, die bessere Licht- und Wetterechtheiten als das genannte C.I. Pigment Red 170 aufweisen.

Es wurde gefunden, dass die nachstehend definierten Mischkristalle aus C.I. Pigment Red 170 und Derivaten der Formel (1) überraschenderweise diese Aufgabe lösen.

Gegenstand der vorliegenden Erfindung sind Mischkristalle aus C.I. Pigment Red 170 und einer oder mehrerer der Verbindungen der Formel (1) 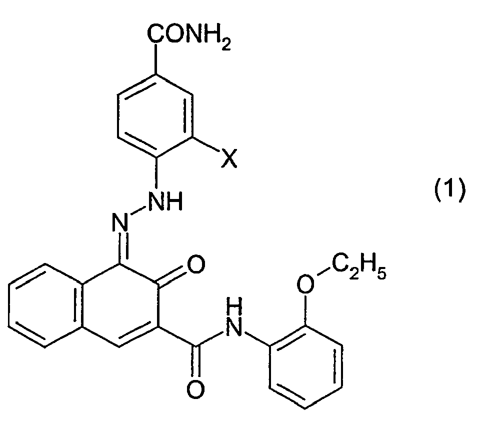 worin
X die Bedeutung F, Cl, Br, Methyl oder Nitro hat.
Im Folgenden werden die Verbindungen (1) mit X=F als "F-P.R.170", mit X=Cl als "Cl-P.R.170, mit X=Br als "Br-P.R.170", mit X=Methyl als "Methyl-P.R.170", mit X=Nitro als "Nitro-P.R.170" und mit X=H als "P.R.170" bezeichnet.

Die Formel (1) ist als idealisierte Darstellung zu verstehen und umfasst auch die entsprechenden tautomeren Formen sowie die möglichen cis/trans-Isomere jeder tautomeren Form.

Unter Mischkristallen werden im Sinne der vorliegenden Erfindung auch "feste Lösungen" oder" solid solutions" verstanden. Die Eigenschaften der Mischkristalle unterscheiden sich sowohl von den Eigenschaften der Einzelkomponenten, als auch von den Eigenschaften der physikalischen Mischungen der Einzelkomponenten. Insbesondere unterscheiden sich die Röntgenpulverdiagramme der Mischkristalle von der Summe der Pulverdiagramme der Einzelverbindungen.

Die Verbindungen der Formel (1) als solche, sowie Verfahren zu ihrer Herstellung sind in der noch unveröffentlichten deutschen Patentanmeldung 102 24 279.8 beschrieben. Sowohl Methyl-P.R.170 als auch Nitro-P.R.170 treten in mehreren verschiedenen Phasen auf.

Die Mischkristalle können zwischen 0,1 und 99,9 Gew.-%, vorzugsweise zwischen 1 und 99 Gew.-%, insbesondere zwischen 80 und 99 Gew.-%, an C.I. Pigment Red 170 enthalten, und zwischen 99,9 und 0,1 Gew.-%, vorzugsweise zwischen 99 und 1 Gew.-%, insbesondere zwischen 20 und 1 Gew.-%, einer Verbindung der Formel (1) oder einer beliebigen Mischung aus mehreren, z.B. 2 oder 3, Verbindungen der Formel (1).

Die Anteile der Einzelkomponenten in den erfindungsgemäßen Mischkristallen betragen für jede Einzelkomponente bevorzugt zwischen 1 und 99 Mol-%, besonders bevorzugt zwischen 10 und 90 Mol-%. Bevorzugte binäre Mischkristalle bestehen aus P.R.170 und einer der Verbindungen der Formel (1), insbesondere solchen mit X=Cl oder Methyl, vorzugsweise im molaren Mengenverhältnis von 100:1 bis 3:1, insbesondere von 50:1 bis 10:1.

Die Mischkristalle können in verschiedenen Kristallmodifikationen auftreten. Beispielsweise können die Mischkristalle isotyp zur alpha-, beta- oder gamma-Phase von C.I. Pigment Red 170 sein. Auch die Isotypie wird über Röntgenpulverdiagramme festgestellt. Im Zweifelsfall wird eine Mischkristallreihe mit verschiedenen Konzentrationen angefertigt, um zu erkennen, ob sich die Linienlagen und die Linienintensitäten kontinuierlich mit der Zusammensetzung ändern.
Die Mischkristalle zeichnen sich durch rote Farbtöne, hohe Farbstärken und sehr gute Licht- und Wetterechtheiten aus.

Die erfindungsgemäßen Mischkristalle können beispielsweise durch Cosynthese oder durch gemeinsames Umkristallisieren, Mahlen und/oder Finishen der verschiedenen Einzelverbindungen hergestellt werden.

Die erfindungsgemäßen Pigmente können beispielsweise durch Diazotierung einer Mischung aus 1-Aminobenzol-4-carbonsäureamid (Formel (2), X = H) und einem oder mehreren Aminen der Formel (2) 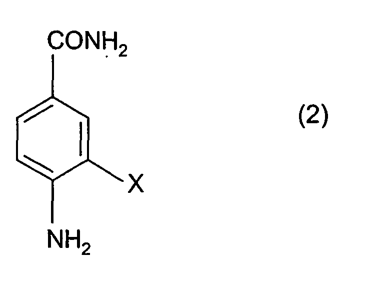 wobei X die Bedeutung F, Cl, Br, Methyl oder Nitro hat,
und anschließende Kupplung mit der Verbindung der Formel (3) 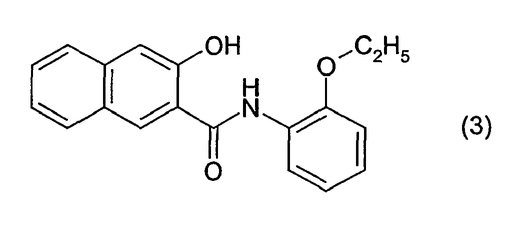 hergestellt werden.

Die erfindungsgemäßen Mischkristallpigmente können auch beispielsweise durch getrennte Diazotierung von 1-Aminobenzol-4-carbonsäureamid (Formel (2), X = H) und einem oder mehreren Aminen der Formel (2) mit anschließender Mischung der Diazoniumsalze und nachfolgender Kupplung der Mischung mit der Verbindung der Formel (3) hergestellt werden.

Die erfindungsgemäßen Mischkristallpigmente können auch hergestellt werden, indem mindestens ein diazotiertes Amin der Formel (2) mit 1-(2',3'-Oxynaphthoylamino)-2-ethoxybenzol der Formel (3) in Gegenwart von fertigem C.I. Pigment Red 170 gekuppelt wird.

Die erfindungsgemäßen Mischkristallpigmente können auch hergestellt werden, indem diazotiertes 1-Aminobenzol-4-carbonsäureamid mit 1-(2',3'-Oxynaphthoylamino)-2-ethoxybenzol der Formel (3) in Gegenwart mindestens einer Verbindung der Formel (1) gekuppelt wird.

Für die Diazotierungsreaktion eignen sich Alkalimetallnitrite oder die Alkylnitrite kurzkettiger Alkane, zusammen mit starken Mineralsäuren. Besonders geeignet sind Natriumnitrit und Salzsäure. Die Reaktion kann in einem Temperaturbereich von -5°C bis + 30°C durchgeführt werden, vorzugsweise zwischen 0°C und 10°C. Obwohl nicht erforderlich, können bei der Diazotierung nichtionogene, anionische oder kationische oberflächenaktive Substanzen zugegen sein. Gegebenenfalls können auch weitere Hilfsmittel, wie natürliche oder synthetische Harze oder Harzderivate, verwendet werden.
Die Kupplung ist nach der direkten oder indirekten Methode möglich, erfolgt vorzugsweise jedoch indirekt, d.h. die Kuppelkomponente wird zum vorgelegten Diazoniumsalz gegeben. Die Kuppelreaktion kann in einem Temperaturbereich zwischen -5°C und 80°C durchgeführt werden, vorzugsweise zwischen 5°C und 25°C, und bei einem pH-Wert zwischen pH 4 und pH 14, insbesondere zwischen pH 9 und pH 12. Die Azokupplungsreaktion erfolgt vorzugsweise in wässriger Lösung oder Suspension, es können aber auch organische Lösemittel, gegebenenfalls im Gemisch mit Wasser eingesetzt werden.
Der Zusatz von alkalilöslichen harzartigen Hilfsmitteln oder Mischungen davon während oder nach der Kupplung, sowie vor oder während der Verlackung verbessert die Dispergierbarkeit der erfindungsgemäßen Mischkristall-Pigmente. Zweckmäßigerweise werden die harzartigen Hilfsmittel oder Mischungen davon in Form ihrer wässrig-alkalischen Lösungen eingesetzt. Als harzartige Hilfsmittel eignen sich natürliche und synthetische Harze. Als vorteilhaft sind Kolophonium, disproportioniertes bzw. hydriertes Kolophonium, sowie Kolophoniumderivate zu nennen. Bevorzugt sind natürliche Harzsäuren, wie Abietinsäure, Dihydroabietinsäure, Tetrahydroabietinsäure, Laevopimarsäure, Dextropimarsäure und Isodextropimarsäure, wie sie in handelsüblichen Kolophoniumarten vorliegen. Besonders bevorzugt ist das kommerziell erhältliche Harz Rosin N, das die Harzsäuren Abietinsäure, Dehydroabetinsäure, Neoabietinsäure, Palustrinsäure, Isopimarsäure, Pimarsäure und Sandaracopimarsäure enthält, oder ein dem Rosin N äquivalentes Handelsprodukt. Neben den aufgezählten Harzen und deren Derivaten, können auch Alkydharze oder synthetische Kohlenwasserstoffharze eingesetzt werden. Die genannten Harze werden vorzugsweise im Anschluss an die Kupplungsreaktion der Reaktionsmischung zugefügt.

Im allgemeinen wird die Kuppelkomponente, bezogen auf die Diazoniumverbindung, in einem leichten Überschuss eingesetzt, vorzugsweise wird 1 Äquivalent Diazokomponente mit 1,001 bis 1,10 Äquivalenten der Kuppelkomponente umgesetzt.
Nach der Kupplung werden die erfindungsgemäßen Verbindungen bevorzugt einer Wärmebehandlung in wässrigem, wässrig-organischem oder organischem Medium bei Temperaturen zwischen 80 und 200°C, gegebenenfalls unter Druck, und zweckmäßigerweise für 1 bis 6 Stunden unterworfen, insbesondere in Gegenwart der vorstehend genannten harzartigen Hilfsmittel. Wie vorstehend beschrieben, können dabei bestimmte Kristallphasen entstehen oder Phasenumwandlungen eintreten. Anschließend können die erhaltenen Pigmentsuspensionen auf die übliche Weise filtriert, der Presskuchen mit Wasser salzfrei gewaschen, getrocknet und gemahlen werden.
Je nach gewünschtem Anwendungsbereich kann es auch sinnvoll sein, das aus der Synthese erhaltene Pigment zunächst einer mechanischen Feinverteilung zu unterwerfen. Die Feinverteilung kann durch Nass- oder Trockenmahlung oder Kneten erfolgen. An die Mahlung bzw. Knetung kann sich dann eine Behandlung mit einem Lösemittel, mit Wasser, oder einem Lösemittel/Wasser-Gemisch anschließen.
Zur Erleichterung der Mischkristallbildung, zur Stabilisierung der Mischkristalle, zur Verbesserung der coloristischen Eigenschaften und zur Erzielung bestimmter coloristischer Effekte können an beliebigen Stellen des Verfahrens Pigmentdispergatoren, oberflächenaktive Mittel, Entschäumer, Extender oder andere Zuschlagstoffe zugesetzt werden. Es können auch Mischungen dieser Zusatzstoffe verwendet werden. Die Zugabe der Zusatzstoffe kann auf einmal oder in mehreren Portionen erfolgen. Die Zusatzstoffe können an jedem Punkt der Synthese oder der verschiedenen Nachbehandlungen, oder nach den Nachbehandlungen zugegeben werden. Der am besten geeignete Zeitpunkt muss zuvor durch orientierende Versuche ermittelt werden.

Es ist auch möglich, einen oder mehrere der genannten Verfahrensschritte zur Herstellung der erfindungsgemäßen Mischkristalle in einem Mikroreaktor durchzuführen, wie z.B. in EP-A-1 257 602 beschrieben.

Die erfindungsgemäßen Mischkristalle können auch durch Mischung von P.R.170 und einer oder mehrerer Verbindungen der Formel (1) mit anschließender Behandlung z.B. Kneten, Mahlen, Umkristallisieren und/oder Erwärmen z.B. in Wasser und/oder Lösungsmittel, auch unter Druck, erhalten werden. Beispielsweise kann man P.R.170 in der alpha-Phase mit 10 Mol-% Methyl-P.R.170 in der alpha-Phase mischen, und in Wasser auf 130°C bis 160°C erwärmen und so einen Mischkristall in der gamma-Phase erhalten. Mischkristalle aus C.I. Pigment Red 170 und Methyl-P.R.170 in der alpha-Phase entstehen beispielsweise, wenn man eine Mischung aus 0,1 bis 99,9 Gew.-% 1-Aminobenzol-4-carbonsäureamid und 99,9 bis 0,1 Gew.-% 1-Amino-2-methylbenzol-4-carbonsäureamid diazotiert, und auf 1-(2',3'-Oxynaphthoylamino)-2-ethoxybenzol kuppelt, ohne die Suspension anschließend zu erwärmen. Die entstehenden Mischkristalle bilden über den gesamten Zusammensetzungsbereich eine lückenlose Mischkristallreihe mit der alpha-Phase von P.R.170 und der alpha-Phase von Methyl-P.R.170.

Mischkristalle aus C.I. Pigment Red 170 und Methyl-P.R.170 in der beta-Phase entstehen beispielsweise, wenn man Synthese und Finish gemäß DE 1 228 731, Beispiel 4 durchführt (Diazotierung, Kupplung, Zugabe von Harzseife und Calciumchlorid, 1-stündiges Kochen), und statt 1-Aminobenzol-4-carbonsäureamid eine äquimolare Mischung aus 1-Aminobenzol-4-carbonsäureamid und 1-Amino-2-methylbenzol-4-carbonsäureamid einsetzt. Der entstehende Mischkristall ist isotyp zur beta-Phase von P.R.170. Der Mischkristall zeichnet sich im Röntgenpulverdiagramm durch folgende charakteristische Linien aus (Cu-K_{α-}Strahlung, 2 theta-Werte in Grad, Messgenauigkeit +/- 0,2°, Intensitäten: ss = sehr stark, s = stark, m = mittel, w = schwach, vw = sehr schwach):

**Methyl-Mischkristall, beta-Phase:**

| 2 theta: | relative Intensität: |
|---|---|
| 7.09 | s |
| 8.36 | m |
| 11.31 | m |
| 12.83 | w |
| 15.10 | w |
| 15.28 | w |
| 17.80 | w |
| 25.33 | ss |
| 28.80 | w |

Wenn man demgegenüber die beiden Verbindungen nach demselben Verfahren einzeln synthetisiert, und die Pigmente anschließend mischt, erhält man folgendes Röntgenpulverdiagramm:

**Methyl-Mischung:**

| 2 theta: | relative Intensität: |
|---|---|
| 5.3 | w |
| 7.2 | m |
| 7.7 | s |
| 8.2 | m |
| 8.3 | w |
| 11.4 | m |
| 11.5 | s |
| 12.1 | w |
| 13.7 | m |
| 15.1 | w |
| 15.9 | m |
| 17.9 | w |
| 18.9 | m |
| 23.8 | m |
| 23.9 | m |
| 25.0 | m-s |
| 25.6 | ss |
| 25.7 | m-s |
| 27.1 | m |

Mischkristalle aus C.I. Pigment Red 170 und Nitro-P.R.170 in der gamma-Phase entstehen beispielsweise, wenn man Synthese und Finish gemäß DE 2 043 482, Beispiel 1 durchführt (Diazotierung, Kupplung, 3-stündiges Erhitzen in Wasser bei 130°C), und statt 1-Aminobenzol-4-carbonsäureamid eine Mischung aus 90 Mol-% 1-Aminobenzol-4-carbonsäureamid und 10 Mol-Prozent 1-Amino-2-nitrobenzol-4-carbonsäureamid einsetzt. Der entstehende Mischkristall ist isotyp zur gamma-Phase von P.R.170. und zeichnet sich im Röntgenpulverdiagramm durch folgende charakteristische Linien aus:

**Nitro-Mischkristall, gamma-Phase:**

| 2 theta: | relative Intensität: |
|---|---|
| 7.29 | s |
| 8.84 | w |
| 9.04 | w |
| 11.35 | m |
| 12.98 | m-w |
| 15.36 | m |
| 18.17 | m |
| 20.31 | w |
| 23.50 | w |
| 25.63 | ss |
| 26.06 | m |

Auch hier unterscheidet sich das Röntgenpulverdiagramm des Mischkristalls deutlich vom Röntgenpulverdiagramm einer physikalischen Mischung der Einzelkomponenten.

In Abhängigkeit von der Reinheit der Edukte, den Konzentrationen, den angewandten Temperaturen und Temperaturverläufen, dem zeitlichen Verlauf der Synthese und einer eventuellen Nachbehandlung, dem Druck, der Anwesenheit von Verunreinigungen oder Additiven, und der Gegenwart von Impfkristallen können entweder nur Mischkristalle einer einzigen Phase, oder Mischkristalle verschiedener Phasen, oder eine Mischung aus Mischkristallen und einer oder mehreren Reinverbindungen entstehen.

Die erfindungsgemäßen Mischkristalle lassen sich zum Pigmentieren von hochmolekularen organischen Materialien natürlicher oder synthetischer Herkunft einsetzen, beispielsweise von Kunststoffen, Harzen, Lacken, Anstrichfarben oder elektrophotographischen Tonern und Entwicklern, sowie von Tinten und Druckfarben.

Hochmolekulare organische Materialien, die mit den erfindungsgemäßen Mischkristallen pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, beispielsweise Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen. Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäßen Verbindungen in Form von Pulvern, Granulaten, Präparationen, Flushpasten, Masterbatches oder Dispersionen zu einzusetzen. Bezogen auf das zu pigmentierende, hochmolekulare organische Material setzt man die erfindungsgemäßen Verbindungen in einer Menge von 0,05 bis 30 Gew.-%, vorzugsweise 0,1 bis 15 Gew.-% ein.

Die erfindungsgemäßen Mischkristalle sind auch geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Latextoner, Polymerisationstoner sowie Spezialtoner.

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren sind die erfindungsgemäßen Mischkristalle geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.
Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Mischkristalle als Farbmittel in Tinten, vorzugsweise Ink-Jet Tinten, wie z.B. auf wässriger oder nichtwässriger Basis, Mikroemulsionstinten sowie in solchen Tinten, die nach dem hot-melt-Verfahren arbeiten, geeignet.
Ink-Jet-Tinten enthalten im allgemeinen insgesamt 0,5 bis 15 Gew.-%, vorzugsweise 1,5 bis 8 Gew.-%, (trocken gerechnet) einer oder mehrerer der erfindungsgemäßen Mischkristalle.
Mikroemulsionstinten basieren auf organischen Lösemitteln, Wasser und ggf. einer zusätzlichen hydrotropen Substanz (Grenzflächenvermittler). Mikroemulsionstinten enthalten 0,5 bis 15 Gew.-%, vorzugsweise 1,5 bis 8 Gew.-%, einer oder mehrerer der erfindungsgemäßen Mischkristalle, 5 bis 99 Gew.-% Wasser und 0,5 bis 94,5 Gew.-% organisches Lösungsmittel und/oder hydrotrope Verbindung.
"Solvent based" Ink-Jet-Tinten enthalten vorzugsweise 0,5 bis 15 Gew.-% einer oder mehrerer erfindungsgemäßer Mischkristalle, 85 bis 99,5 Gew.-% organisches Lösungsmittel und/oder hydrotrope Verbindungen.
Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt Ink-Jet-Tinten bestehen z.B. im wesentlichen aus 20 bis 90 Gew.-% Wachs und 1 bis 10 Gew.-% einer oder mehrerer der erfindungsgemäßen Mischkristalle. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein.

Außerdem sind die erfindungsgemäßen Mischkristalle auch geeignet als Farbmittel für Farbfilter, sowohl für die additive wie für die subtraktive Farberzeugung sowie als Farbmittel für elektronische Tinten ("electronic inks" bzw. "e-inks") oder "electronic paper".
Weiterhin sind die erfindungsgemäßen Mischkristalle auch zur Einfärbung von Saatgut geeignet.

Die erfindungsgemäßen Pigmente zeichnen sich durch hohe Farbstärken und sehr gute Licht- und Wetterechtheiten aus. Sie enthalten keine für die Umwelt bedenklichen Schwermetalle. Die aufgezählten Eigenschaften qualifizieren die erfindungsgemäßen Pigmente insbesondere zum Einsatz als Farbmittel in Lacken, vorzugsweise Automobillacken, und in Kunststoffen, sowie in Druckfarben.

Mit dem Begriff "Teile" sind in den folgenden Beispielen und Vergleichsbeispielen Gewichtsteile gemeint.

### Vergleichsbeispiele: X = H

### a) Synthese gemäß Patent DE 1 228 731 Beispiel 4:

13,6 Gew.-Teile 1-Aminobenzol-4-carbonsäureamid werden mit 60 Volumenteilen 5 n-Salzsäure einige Zeit verrührt. Dann wird das Gemisch mit Wasser verdünnt und bei 10°C mit 20 Volumenteilen 5 n-Natriumnitritlösung diazotiert. Währenddessen werden 33 Gew.-Teile 1-(2',3'-Oxynaphthoylamino)-2-ethoxybenzol mit 450 Volumenteilen Wasser und 42 Volumenteilen 5 n-Natronlauge heiß gelöst und die Lösung geklärt. Diese Lösung lässt man innerhalb 30 bis 45 Minuten bei 10 bis 15°C unter Rühren in die Diazolösung einlaufen, der man zuvor 7 Volumenteile Eisessig und 50 Volumenteile 2 n-Natriumacetatlösung zugesetzt hat. Der erhaltene Niederschlag wird abgesaugt und gewaschen. Es entsteht die alpha-Phase von C.I. Pigment Red 170.

### b) Synthese und Finish in Anlehnung an DE 1 228 731 Beispiel 4:

13,6 Gew.-Teile 1-Aminobenzol-4-carbonsäureamid werden mit 60 Volumenteilen 5 n-Salzsäure einige Zeit verrührt. Dann wird das Gemisch mit Wasser verdünnt und bei 10°C mit 20 Volumenteilen 5 n-Natriumnitritlösung diazotiert. Währenddessen werden 33 Gew.-Teile 1-(2',3'-Oxynaphthoylamino)-2-ethoxybenzol mit 450 Volumenteilen Wasser und 42 Volumenteilen 5 n-Natronlauge heiß gelöst und die Lösung geklärt. Diese Lösung lässt man innerhalb 30 bis 45 Minuten bei 10 bis 15°C unter Rühren in die Diazolösung einlaufen, der man zuvor 7 Volumenteile Eisessig und 50 Volumenteile 2 n-Natriumacetatlösung zugesetzt hat. Nach beendeter Kupplung werden nacheinander wässrige Lösungen von 5 Gewichtsteilen Harzseife und 3 Gewichtsteilen Calciumchlorid zugesetzt und 3 Stunden gekocht. Der erhaltene Niederschlag wird abgesaugt und gewaschen. Es entsteht die beta-Phase von C.I. Pigment Red 170.

### c) Finish gemäß Patent DE 2043482 Beispiel 1:

45 Gewichtsteile des im Vergleichsbeispiel (a) hergestellten Pigmentes in Form des wässrigen Filterkuchens werden mit 1000 Gew.-Teilen Wasser angerührt, auf eine Temperatur von 130°C erhitzt und 3 Stunden bei dieser Temperatur gehalten. Anschließend wird filtriert, mit Wasser gewaschen, getrocknet und gepulvert. Man erhält C.I. Pigment Red 170 in der gamma-Phase.

### Beispiel 1: X = CH₃, 1%

Die Synthese erfolgt wie im Vergleichsbeispiel (a), aber man setzt als Amin statt des 4-Aminobenzamids eine Mischung aus 13,5 Teilen 4-Aminobenzamids und 0,15 Teilen 4-Amino-3-methyl-benzamid ein. Man erhält einen Mischkristall, der isotyp zur alpha-Phase von P.R.170 ist.

### Beispiel 2: X = CH₃, 10%

Die Synthese erfolgt wie im Beispiel 1, aber man setzt als Amin eine Mischung aus 12,2 Teilen 4-Aminobenzamids und 1,5 Teilen 4-Amino-3-methyl-benzamid ein. Man erhält einen Mischkristall, der isotyp zur alpha-Phase von P.R.170 ist.

### Beispiel 3: X = CH₃, 20 %

Die Synthese erfolgt wie im Beispiel 1, aber man setzt als Amin eine Mischung aus 10,9 Teilen 4-Aminobenzamids und 3,0 Teilen 4-Amino-3-methyl-benzamid ein. Man erhält einen Mischkristall, der isotyp zur alpha-Phase von P.R.170 ist.

### Beispiel 4: X = CH₃, 40 %

Die Synthese erfolgt wie im Beispiel 1, aber man setzt als Amin eine Mischung aus 8,2 Teilen 4-Aminobenzamids und 6,0 Teilen 4-Amino-3-methyl-benzamid ein. Man erhält einen Mischkristall, der isotyp zur alpha-Phase von P.R.170 ist.

### Beispiel 5: X = CH₃, 60 %

Die Synthese erfolgt wie im Beispiel 1, aber man setzt als Amin eine Mischung aus 5,4 Teilen 4-Aminobenzamids und 9,1 Teilen 4-Amino-3-methyl-benzamid ein. Man erhält einen Mischkristall, der isotyp zur alpha-Phase von P.R.170 ist.

### Beispiel 6: X = CH₃, 80 %

Die Synthese erfolgt wie im Beispiel 1, aber man setzt als Amin eine Mischung aus 2,7 Teilen 4-Aminobenzamids und 12,1 Teilen 4-Amino-3-methyl-benzamid ein. Man erhält einen Mischkristall, der isotyp zur alpha-Phase von P.R.170 ist.

### Beispiel 7: X = CH₃, 90 %

Die Synthese erfolgt wie im Beispiel 1, aber man setzt als Amin eine Mischung aus 1,4 Teilen 4-Aminobenzamids und 13,6 Teilen 4-Amino-3-methyl-benzamid ein. Man erhält einen Mischkristall, der isotyp zur alpha-Phase von P.R.170 ist.

### Beispiel 8: X = CH₃, 99 %

Die Synthese erfolgt wie im Beispiel 1, aber man setzt als Amin eine Mischung aus 0,14 Teilen 4-Aminobenzamids und 14,95 Teilen 4-Amino-3-methyl-benzamid ein. Man erhält einen Mischkristall, der isotyp zur alpha-Phase von P.R.170 ist.

### Beispiel 9: X = CH₃, 10 %, beta-Phase

Die Synthese erfolgt wie im Vergleichsbeispiel (b), aber man setzt als Amin statt des 4-Aminobenzamids eine Mischung aus 12,2 Teilen 4-Aminobenzamids und 1,5 Teilen 4-Amino-3-methyl-benzamid ein. Man erhält einen Mischkristall, der isotyp zur beta-Phase von P.R.170 ist.

### Beispiel 10: X = Cl, 10 %

Die Synthese erfolgt wie im Vergleichsbeispiel (b), aber man setzt als Amin statt des 4-Aminobenzamids eine Mischung aus 12,2 Teilen 4-Aminobenzamids und 1,7 Teilen 4-Amino-3-chlor-benzamid ein. Man erhält eine Mischung aus einem Mischkristall aus P.R.170 und CI-P.R.170, der isotyp zur beta-Phase von P.R.170 ist und geringen Anteilen eines Mischkristalls aus P.R.170 und CI-P.R.170, der isotyp zur gamma-Phase von P.R.170 ist.

### Beispiel 11: X = Nitro, 10 %

Die Synthese erfolgt wie im Vergleichsbeispiel (b), aber man setzt als Amin statt des 4-Aminobenzamids eine Mischung aus 12,2 Teilen 4-Aminobenzamids und 1,7 Teilen 4-Amino-3-nitro-benzamid ein. Man erhält einen Mischkristall, der isotyp zur alpha-Phase von P.R.170 ist.

### Beispiel 12: X = F, 10 %

Die Synthese erfolgt wie im Vergleichsbeispiel (b), aber man setzt als Amin statt des 4-Aminobenzamids eine Mischung aus 12,2 Teilen 4-Aminobenzamids und 1,5 Teilen 4-Amino-3-fluor-benzamid ein. Man erhält einen Mischkristall, der isotyp zur alpha-Phase von P.R.170 ist.

### Beispiel 13: X = Br, 10 %

Die Synthese erfolgt wie im Vergleichsbeispiel (b), aber man setzt als Amin statt des 4-Aminobenzamids eine Mischung aus 12,2 Teilen 4-Aminobenzamids und 2,15 Teilen 4-Amino-3-brom-benzamid ein. Man erhält einen Mischkristall, der isotyp zur beta-Phase von P.R.170 ist.

### Beispiel 14: X = CH₃, 10 %, gamma-Phase

Synthese und Finish erfolgen wie im Vergleichsbeispiel (c), aber man setzt als Amin statt des 4-Aminobenzamids eine Mischung aus 12,2 Teilen 4-Aminobenzamids und 1,5 Teilen 4-Amino-3-methyl-benzamid ein. Man erhält einen Mischkristall, der isotyp zur gamma-Phase von P.R.170 ist.

### Beispiel 15: X = Cl, 5 %

Synthese und Finish erfolgen wie im Vergleichsbeispiel (c), aber man setzt als Amin statt des 4-Aminobenzamids eine Mischung aus 12,9 Teilen 4-Aminobenzamids und 0,85 Teilen 4-Amino-3-chlor-benzamid ein. Man erhält einen Mischkristall, der isotyp zur gamma-Phase von P.R.170 ist.

### Beispiel 16: X = Nitro, 10 %

Synthese und Finish erfolgen wie im Vergleichsbeispiel (c), aber man setzt als Amin statt des 4-Aminobenzamids eine Mischung aus 12,2 Teilen 4-Aminobenzamids und 1,7 Teilen 4-Amino-3-nitro-benzamid ein. Man erhält einen Mischkristall, der isotyp zur gamma-Phase von P.R.170 ist.

### Beispiel 17: X = F, 10 %

Synthese und Finish erfolgen wie im Vergleichsbeispiel (c), aber man setzt als Amin statt des 4-Aminobenzamids eine Mischung aus 12,2 Teilen 4-Aminobenzamids und 1,5 Teilen 4-Amino-3-fluor-benzamid ein. Man erhält einen Mischkristall, der isotyp zur gamma-Phase von P.R.170 ist.

### Beispiel 18: X = Br, 10 %

Synthese und Finish erfolgen wie im Vergleichsbeispiel (c), aber man setzt als Amin statt des 4-Aminobenzamids eine Mischung aus 12,2 Teilen 4-Aminobenzamids und 2,15 Teilen 4-Amino-3-brom-benzamid ein. Man erhält einen Mischkristall, der isotyp zur gamma-Phase von P.R.170 ist.

### Beispiel 19: X = CH₃, 50 %

Synthese und Finish erfolgen wie im Vergleichsbeispiel (c), aber man setzt als Amin statt des 4-Aminobenzamids eine Mischung aus 6,8 Teilen 4-Aminobenzamids und 7,6 Teilen 4-Amino-3-methyl-benzamid ein. Man erhält einen Mischkristall, der isotyp zur beta-Phase von P.R.170 ist.

### Beispiel 20: X = Cl, 5 %, Isobutanolfinish

Synthese erfolgt wie im Vergleichsbeispiel (a), wobei als Amin eine Mischung aus 12,9 Teilen 4-Aminobenzamid und 0,85 Teilen 4-Amino-3-chlor-benzamid eingesetzt wird. Das so hergestellte Pigment in Form des wässrigen Filterkuchens wird mit 171 Gew.-Teilen Isobutanol und 65 Gewichtsteilen Wasser angerührt, auf eine Temperatur von 105°C erhitzt und 1 Stunde bei dieser Temperatur gehalten. Anschließend wird filtriert, mit Wasser gewaschen, getrocknet und gepulvert. Man erhält einen Mischkristall, der isotyp zur beta-Phase von P.R.170 ist.

### Gegenbeispiel 1: Isomeres Amin mit Cl, 10 %

Die Synthese erfolgt wie in Beispiel 10, aber man setzt statt 4-Amino-3-chlor-benzamid 3-Amino-4-chlorbenzamid ein. Man erhält keinen Mischkristall, sondern eine Mischung aus P.R.170 in der alpha-Phase, P.R.170 in der gamma-Phase und dem Reaktionsprodukt aus diazotiertem 3-Amino-4-chlorbenzamid und 1-(2',3'-Oxynaphthoylamino)-2-ethoxybenzol.

### Gegenbeispiel 2: Isomeres Amin mit Methyl, 10 %

Die Synthese erfolgt wie in Beispiel 9, aber man setzt statt 4-Amino-3-methylbenzamid 3-Amino-4-methylbenzamid ein. Man erhält keinen Mischkristall, sondern eine Mischung aus P.R.170 in der gamma-Phase und dem Reaktionsprodukt aus diazotiertem 3-Amino-4-methylbenzamid und 1-(2',3'-Oxynaphthoylamino)-2-ethoxybenzol.

### Gegenbeispiel 3: Isomeres Amin mit Cl, 10 %

Die Synthese erfolgt wie in Beispiel 15, aber man setzt als Amin eine Mischung aus 12,2 Teilen 4-Aminobenzamids und 1,7 Teilen 3-Amino-4-chlor-benzamid (statt 4-Amino-3-chlorbenzamid) ein. Man erhält keinen Mischkristall, sondern eine Mischung aus P.R.170 in der y-Phase und dem Reaktionsprodukt aus diazotiertem 3-Amino-4-chlorbenzamid und 1-(2',3'-Oxynaphthoylamino)-2-ethoxybenzol.

### Gegenbeispiel 4: Isomeres Amin mit Methyl, 10 %

Die Synthese erfolgt wie in Beispiel 14, aber man setzt statt 4-Amino-3-methylbenzamid 3-Amino-4-methylbenzamid ein. Man erhält keinen Mischkristall, sondern eine Mischung aus P.R.170 in der gamma-Phase und dem Reaktionsprodukt aus diazotiertem 3-Amino-4-methylbenzamid und 1-(2',3'-Oxynaphthoylamino)-2-ethoxybenzol.

### Gegenbeispiel 5: Physikalische Mischung.

Synthese und Finish des Methyl-P.R.170 erfolgen wie im Vergleichsbeispiel (c), aber man setzt als Amin statt des 4-Aminobenzamids 15,1 Teile 4-Amino-3-methyl-benzamid ein. Man erhält eine Methyl-P.R.170 in der alpha-Phase. 10,3 Teile des so hergestellten, getrockneten Pigmentes werden mit 10 Teilen P.R.170 von Vergleichsbeispiel (c) gründlich gemischt. Man erhält eine physikalische Mischung.

### Anwendungsbeispiele 1 bis 8: Coloristik in Lack

Zur Beurteilung der Eigenschaften der nach der Erfindung hergestellten Pigment-Phasen auf dem Lacksektor wurde aus der Vielzahl der bekannten Lacke ein aromatenhaltiger Alkydmelaminharzlack (AM) auf Basis eines mittelöligen Alkydharzes und eines butanolveretherten Melaminharzes ausgewählt. Zur besseren Messung der Coloristik wurden Weißaufhellungen mit einem Pigment:
TiO₂-Verhältnis von 1:10 erstellt.
Die Farbtöne werden entweder visuell oder nach dem CIELAB-System angegeben, wobei ΔH, ΔC, ΔL und ΔE der Farbtonunterschied zwischen der Lackierung des Pigmentes und der Lackierung des Produktes des entsprechenden Vergleichsbeispiels ist.

| Anwendungsbeispiel Nr. | Pigment aus Beispiel Nr. | Vergleichsbeispiel | X= | Coloristik des Beispiels gegenüber dem Vergleichsbeispiel |
|---|---|---|---|---|
| 1 | 9 | b | Methyl | Vollton: Spur heller, Spur deckender Aufhellung: |
| | | | | Farbstärke 99 %, ΔH=0,86 (gelber), |
| | | | | ΔC=0,70 (reiner), ΔL=0,24 (heller) |
| 2 | 10 | b | Cl | Vollton: etwas heller, etwas deckender Aufhellung: |
| | | | | Farbstärke 89 %, ΔH=2,10 (gelber), |
| | | | | ΔC= -0,40 (trüber), ΔL=0,1 (heller) |
| 3 | 13 | b | Br | Vollton: etwas heller, etwas gelber, etwas reiner, etwas deckender |
| | | | | Farbstärke 95 %, ΔH=1,88 (gelber), |
| | | | | ΔC=0,78 (reiner), ΔL=0,39 (heller) |
| 4 | 14 | c | Methyl | Vollton: etwas transparenter, etwas dunkler Aufhellung: |
| | | | | Farbstärke 117 %, Spur dunkler |
| 5 | 15 | c | Cl | Vollton: etwas transparenter Aufhellung: |
| | | | | Farbstärke 108 %, Farbton wie (c) |
| 6 | 16 | c | Nitro | Vollton: etwas transparenter, etwas dunkler Aufhellung: |
| | | | | Farbstärke 99%, Spur blauer |
| 7 | 17 | c | F | Vollton: etwas transparenter, etwas dunkler Aufhellung: |
| | | | | Farbstärke 92 %, Spur trüber |
| 8 | 18 | c | Br | Vollton: etwas transparenter, etwas dunkler Aufhellung: |
| | | | | Farbstärke 109 %, Farbton wie (c) |

### Anwendungsbeispiele Nr. 9 bis 11: Wetterechtheiten

Die Pigmente werden in einem aromatenhaltiger Alkydmelaminharzlack (AM) auf Basis eines mittelöligen Alkydharzes und eines butanolveretherten Melaminharzes dispergiert und einer Wetterechtheitsprüfung in der Schnellbewitterungsapparatur Weatherometer CI5000 unterzogen. Die Tests erfolgten in Weißaufhellung 1:10. Die Bewitterungszeit betrug 500 Stunden. Zur Beurteilung wurde der coloristische Gesamtabstand ΔE (im CIELAB-System) zwischen der bewitterten und der unbewitterten Lackierung gemessen. Ein kleineres ΔE entspricht einer besseren Wetterechtheit.

| Anwendungs-Beispiel Nr. | Pigment aus Beispiel Nr. | X= | Farbabstand ΔE |
|---|---|---|---|
| 9 | 9 | Methyl | 10,9 |
| 10 | 10 | Cl | 8,1 |
| 11 | 13 | Br | 5,8 |
| Vergleich (b) | (b) | H | 15,2 |
| Anwendungs-Gegenbeispiel Nr. 1 | Gegenbeispiel Nr. 1 | (Isomeres) | 23,8 |
| Anwendungs-Gegenbeispiel Nr. 2 | Gegenbeispiel Nr. 2 | (Isomeres) | 19,4 |

Die erfindungsgemäßen Pigmente haben eine wesentlich bessere Wetterechtheit als das unter denselben Bedingungen hergestellte Vergleichsbeispiel oder Gegenbeispiel.

### Anwendungsbeispiele Nr. 12 bis 13: Wetterechtheiten

Die Pigmente werden in einem aromatenhaltiger Alkydmelaminharzlack (AM) auf Basis eines mittelöligen Alkydharzes und eines butanolveretherten Melaminharzes dispergiert und einer Wetterechtheitsprüfung in der Schnellbewitterungsapparatur Xenotest Beta X1200 unterzogen. Die Tests erfolgten in Vollton und in Weißaufhellung 1:10. Die Bewitterungszeit betrug 1000 Stunden für die Weißaufhellungen und 2000 Stunden im Vollton.

| Anwendungsbeispiel Nr. | Pigment aus Beispiel Nr. | X= | Vollton / Aufhellung | Farbabstand ΔE |
|---|---|---|---|---|
| 12 | 15 | CI | Vollton | 3,3 |
| Vergleich | (c) | H | Vollton | 8,6 |
| 13 | 15 | Cl | Aufhellung | 5,6 |
| Vergleich | (c) | H | Aufhellung | 6,3 |

Das erfindungsgemäße Pigment hat in Vollton und Aufhellung eine bessere Wetterechtheit als das unter denselben Bedingungen hergestellte Vergleichsbeispiel.

### Anwendungsbeispiel 14: Lichtechtheiten Aufhellung

Die Pigmente werden in einem aromatenhaltiger Alkydmelaminharzlack (AM) auf Basis eines mittelöligen Alkydharzes und eines butanolveretherten Melaminharzes dispergiert und einer Lichtechtheitsprüfung in der Schnellbelichtungsapparatur "Xenotest Beta X1200" im Gleichlauf unterzogen. Die Tests erfolgten in Weißaufhellung 1:10. Die Belichtungszeit betrug 1500 Stunden.

| Anwendungsbeispiel Nr. | Pigment aus Beispiel Nr. | X= | Farbabstand ΔE |
|---|---|---|---|
| 14 | 14 | Methyl | 6,7 |
| Vergleich | (c) | H | 9,2 |
| Anwendungsgegenbeispiel Nr. 3 | Gegenbeispiel Nr. 3 | (Isomeres) | 10,5 nach |
| | | | 750 Stunden* |

| | | | |
|---|---|---|---|
| *) Die Belichtung des Gegenbeispiels wurde nach 750 Stunden abgebrochen, da der Farbton des Lackes sich bereits stark verändert hatte, wohingegen bei den übrigen Beispielen zu diesem Zeitpunkt noch keine merkliche Änderung zu erkennen war. | | | |

Das erfindungsgemäße Pigment hat eine deutlich bessere Lichtechtheit als das unter denselben Bedingungen hergestellte Vergleichsbeispiel.

### Anwendungsbeispiele 15 und 16: Lichtechtheiten Vollton

Es wurde wie bei der Prüfung der Lichtechtheit in den vorigen Anwendungsbeispielen verfahren, jedoch erfolgten die Tests im Vollton. Die Belichtungszeit betrug 2000 Stunden im Gleichlauf.

| Anwendungsbeispiel Nr. | Pigment aus Beispiel Nr. | X= | Farbabstand ΔE |
|---|---|---|---|
| 16 | 17 | F | 2,6 |
| 17 | 18 | Br | 2,2 |
| Vergleich | (c) | H | 3,0 |

Die erfindungsgemäßen Pigmente haben eine etwas bessere Lichtechtheit als das unter denselben Bedingungen hergestellte Vergleichsbeispiel.

### Anwendungsbeispiel 17: Wetterechtheit (50:50-Mischkristall)

Die Pigmente werden in einem aromatenhaltiger Alkydmelaminharzlack (AM) auf Basis eines mittelöligen Alkydharzes und eines butanolveretherten Melaminharzes dispergiert und einer Wetterechtheitsprüfung in der Schnellbewitterungsapparatur Xenotest Beta X1200 unterzogen. Die Tests erfolgten in Weißaufhellung 1:10. Die Bewitterungszeit betrug 1000 Stunden im Gleichlauf.

| Anwendungsbeispiel Nr. | Pigment aus Beispiel Nr. | X= | Kristallphase | Farbabstand ΔE |
|---|---|---|---|---|
| 17 | 19 | CH₃ | beta + etwas gamma | 7,5 |
| Vergleich | (b) | H | beta | 14,9 |
| Vergleich | (c) | H | gamma | 8,6 |
| Anwendungsgegenbeispiel Nr. 4 | Gegenbeispiel 5 | CH₃/H (physikal. Mischung) | alpha(CH₃)/ gamma(H) | 20 |

Das erfindungsgemäße Pigment zeigt - obwohl es zum größten Teil aus der beta-Phase besteht, die bei P.R.170 eine schlechtere Lichtechtheit hat- eine bessere Lichtechtheit als beide Vergleichsversuche. Die Lichtechtheit ist viel besser als bei einer physikalischen Mischung der unter denselben Bedingungen hergestellten Einzelverbindungen.

## Patentansprüche

1. Mischkristall aus C.I. Pigment Red 170 und einer oder mehrerer Verbindungen der Formel (1) 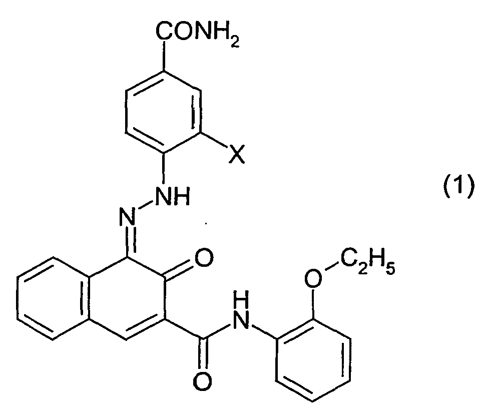 worin
X die Bedeutung F, Cl, Br, Methyl oder Nitro hat.

2. Mischkristall gemäß Anspruch 1, der zwischen 0,1 und 99,9 Gew.-% an C.I. Pigment Red 170 und zwischen 99,9 und 0,1 Gew.-% an mindestens einer Verbindung der Formel (1) enthält.

3. Mischkristall gemäß Anspruch 1 oder 2, der zwischen 1 und 99 Gew.-%, an C.I. Pigment Red 170 und zwischen 99 und 1 Gew.-% an mindestens einer Verbindung der Formel (1) enthält.

4. Mischkristall gemäß Anspruch 1 oder 2, der zwischen 80 und 99 Gew.-%, an C.I. Pigment Red 170 und zwischen 20 und 1 Gew.-%, an mindestens einer Verbindung der Formel (1) enthält.

5. Binärer Mischkristall gemäß mindestens einem der Ansprüche 1 bis 4 aus C.I. Pigment Red 170 und einer Verbindung der Formel (1) mit X = CI oder X = Methyl.

6. Mischkristall nach mindestens einem der Ansprüche 1 bis 5, **dadurch gekennzeichnet, dass** er isotyp zur alpha-Phase von C.I. Pigment Red 170 ist.

7. Mischkristall nach mindestens einem der Ansprüche 1 bis 5, **dadurch gekennzeichnet, dass** er isotyp zur beta-Phase von C.I. Pigment Red 170 ist.

8. Mischkristall nach mindestens einem der Ansprüche 1 bis 5, **dadurch gekennzeichnet, dass** er isotyp zur gamma-Phase von C.I. Pigment Red 170 ist.

9. Verfahren zur Herstellung von Mischkristallen nach einem oder mehreren der Ansprüche 1 bis 8, **dadurch gekennzeichnet, dass** ein Gemisch aus diazotiertem 4-Amino-1-benzolcarbonsäureamid und mindestens einem diazotierten Amin der Formel (2) 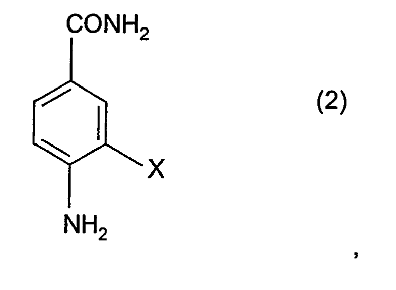 mit einer Verbindung der Formel (3) gekuppelt wird

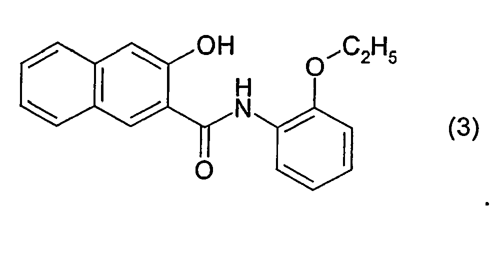

10. Verfahren nach Anspruch 9, **dadurch gekennzeichnet, dass** 4-Amino-1-benzolcarbonsäureamid und mindestens ein Amin der Formel (2) gemischt und gemeinsam diazotiert, oder separat diazotiert und anschließend die Diazoniumsalze gemischt werden.

11. Verfahren zur Herstellung von Mischkristallen nach einem oder mehreren der Ansprüche 1 bis 8, **dadurch gekennzeichnet, dass** mindestens ein diazotiertes Amin der Formel (2) 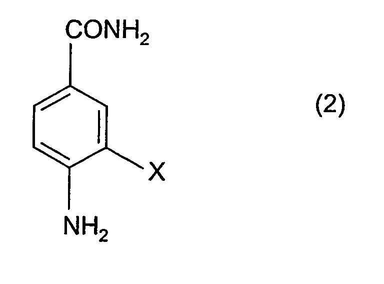 mit einer Verbindung der Formel (3) 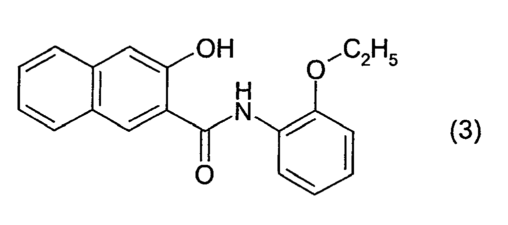 in Gegenwart von C.I.Pigment Red 170 gekuppelt wird.

12. Verfahren zur Herstellung von Mischkristallen nach einem oder mehreren der Ansprüche 1 bis 8, **dadurch gekennzeichnet, dass** diazotiertes 4-Amino-1-benzolcarbonsäureamid mit einer Verbindung der Formel (3) 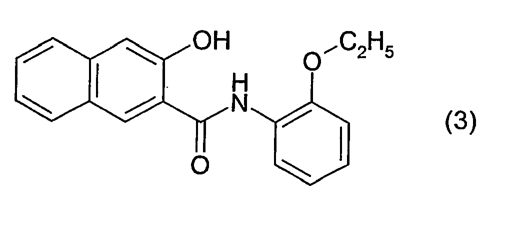 in Gegenwart mindestens einer Verbindung der Formel (1) 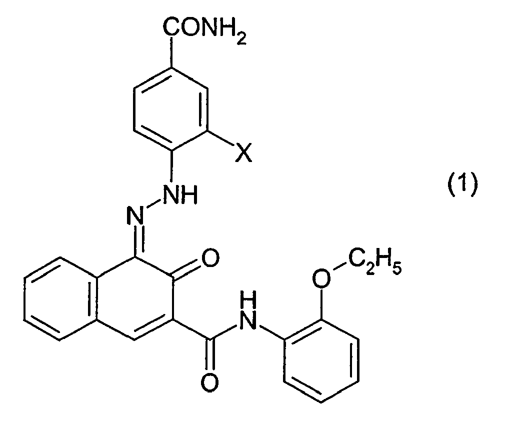 gekuppelt wird.

13. Verfahren zur Herstellung von Mischkristallen nach einem oder mehreren der Ansprüche 1 bis 8, **dadurch gekennzeichnet, dass** C.I. Pigment Red 170 und mindestens eine Verbindung der Formel (1) miteinander gemischt und mindestens einem der Behandlungsschritte Knetung, Mahlung, Umkristallisation, Erwärmen in Wasser und/oder in Lösungsmittel, gegebenenfalls unter Druck, unterzogen werden.

14. Verfahren nach einem oder mehreren der Ansprüche 9 bis 13, **dadurch gekennzeichnet, dass** mindestens einer der Verfahrensschritte in einem Mikroreaktor durchgeführt wird.

15. Verwendung von Mischkristallen nach einem oder mehreren der Ansprüche 1 bis 8 zum Pigmentieren von hochmolekularen organischen Materialien natürlicher oder synthetischer Herkunft.

16. Verwendung nach Anspruch 15, zum Pigmentieren von Kunststoffen, Harzen, Lacken, Anstrichfarben oder elektrophotographischen Tonern und Entwicklern, Tinten, Druckfarben, Farbfiltern und Saatgut.

17. Verwendung nach Anspruch 15 oder 16 zum Pigmentieren von Automobillacken.

## Claims

1. A mixed crystal of C.I. Pigment Red 170 and one or more compounds of the formula (1) 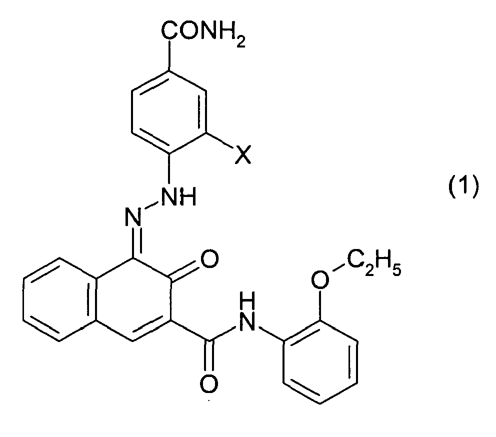 in which
X has the definition F, Cl, Br, methyl or nitro.

2. The mixed crystal as claimed in claim 1, containing between 0.1% and 99.9% by weight of C.I. Pigment Red 170 and between 99.9% and 0.1% by weight of at least one compound of the formula (1).

3. The mixed crystal as claimed in claim 1 or 2, containing between 1% and 99% by weight of C.I. Pigment Red 170 and between 99% and 1% by weight of at least one compound of the formula (1).

4. The mixed crystal as claimed in claim 1 or 2, containing between 80% and 99% by weight of C.I. Pigment Red 170 and between 20% and 1% by weight of at least one compound of the formula (1).

5. A binary mixed crystal as claimed in at least one of claims 1 to 4, comprising C.I. Pigment Red 170 and a compound of formula (1) with X = Cl or X = methyl.

6. The mixed crystal as claimed in at least one of claims 1 to 5, which is isotypic with the alpha phase of C.I. Pigment Red 170.

7. The mixed crystal as claimed in at least one of claims 1 to 5, which is isotypic with the beta phase of C.I. Pigment Red 170.

8. The mixed crystal as claimed in at least one of claims 1 to 5, which is isotypic with the gamma phase of C.I. Pigment Red 170.

9. A process for preparing a mixed crystal as claimed in one or more of claims 1 to 8, which comprises coupling a mixture of diazotized 4-amino-1-benzenecarboxamide and at least one diazotized amine of the formula (2) 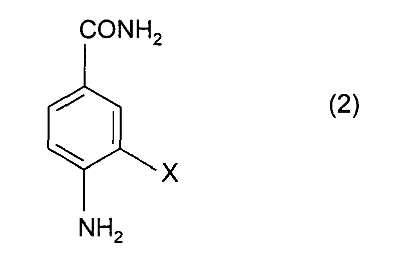 with a compound of the formula (3)

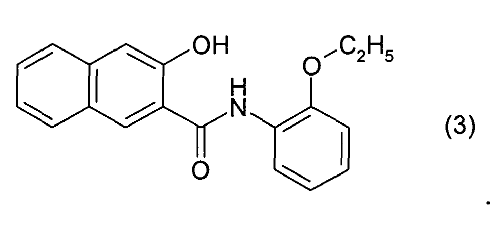

10. The process as claimed in claim 9, wherein 4-amino-1-benzenecarboxamide and at least one amine of the formula (2) are mixed and jointly diazotized, or are separately diazotized and the diazonium salts are subsequently mixed.

11. A process for preparing a mixed crystal as claimed in one or more of claims 1 to 8, which comprises coupling at least one diazotized amine of the formula (2) 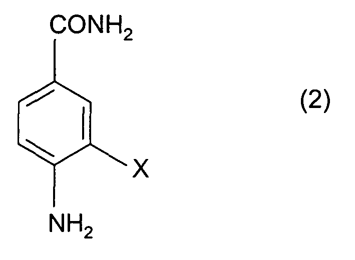 with a compound of the formula (3) 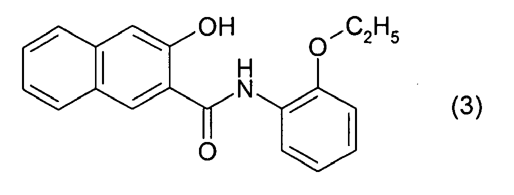 in the presence of C.I. Pigment Red 170.

12. A process for preparing a mixed crystal as claimed in one or more of claims 1 to 8, which comprises coupling diazotized 4-amino-1-benzenecarboxamide with a compound of the formula (3) 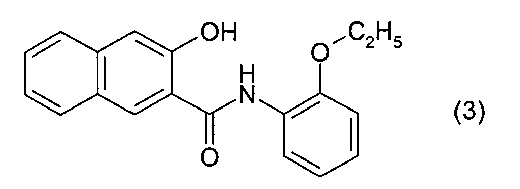 in the presence of at least one compound of the formula (1)

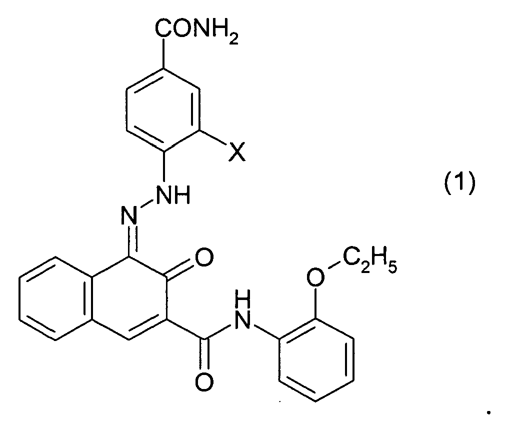

13. A process for preparing a mixed crystal as claimed in one or more of claims 1 to 8, which comprises mixing C.I. Pigment Red 170 and at least one compound of formula (1) with one another and subjecting the mixture to at least one of the treatment steps of kneading, grinding, recrystallization, heating in water and/or in solvent, where appropriate under superatmospheric pressure.

14. The process as claimed in one or more of claims 9 to 13, wherein at least one of the steps is carried out in a microreactor.

15. The use of a mixed crystal as claimed in one or more of claims 1 to 8, for pigmenting high molecular mass organic materials of natural or synthetic origin.

16. The use as claimed in claim 15 for pigmenting plastics, resins, varnishes, paints or electrophotographic toners and developers, inks, including printing inks, color filters or seed.

17. The use as claimed in claim 15 or 16 for pigmenting automotive finishes.

## Revendications

1. Cristal mixte fait du pigment rouge C.I. 170 et d'un ou de plusieurs composés de la formule (1) 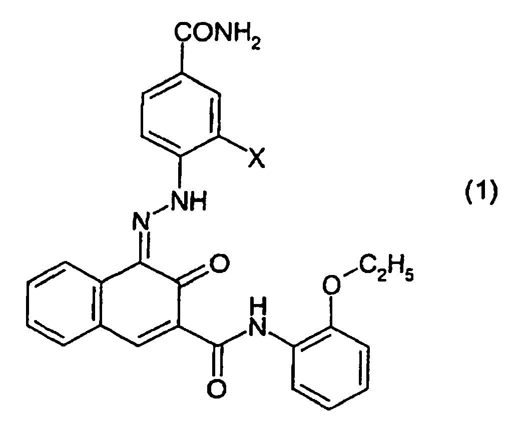 où X a la signification F, Cl, Br, méthyle ou nitro.

2. Cristal mixte selon la revendication 1, qui contient entre 0,1 et 99,9% en poids du pigment rouge C.I. 170 et entre 99,9 et 0,1% en poids d'au moins un composé de la formule (1).

3. Cristal mixte selon la revendication 1 ou 2, qui contient entre 1 et 99% en poids du pigment rouge C.I. 170 et entre 99 et 1% en poids d'au moins un composé de la formule (1).

4. Cristal mixte selon la revendication 1 ou 2, qui contient entre 80 et 99% en poids du pigment rouge C.I. 170 et entre 20 et 1% en poids d'au moins un composé de la formule (1).

5. Cristal mixte binaire selon l'une quelconque des revendications 1 à 4, fait de pigment rouge C.I. 170 et d'un composé de la formule (1) avec X = Cl ou X = méthyle.

6. Cristal mixte selon l'une quelconque des revendications 1 à 5, **caractérisé en ce qu'**il est isotype par rapport à la phase alpha du pigment rouge C.I. 170.

7. Cristal mixte selon l'une quelconque des revendications 1 à 5, **caractérisé en ce qu'**il est isotype par rapport à la phase bêta du pigment rouge C.I. 170.

8. Cristal mixte selon l'une quelconque des revendications 1 à 5, **caractérisé en ce qu'**il est isotype par rapport à la phase gamma du pigment rouge C.I. 170.

9. Procédé en vue de la fabrication de cristaux mixtes selon l'une quelconque des revendications 1 à 8, **caractérisé en ce qu'**un mélange fait d'un amide diazoté de l'acide 4-amino-1-benzènecarboxylique et d'au moins une amine diazotée de la formule (2) 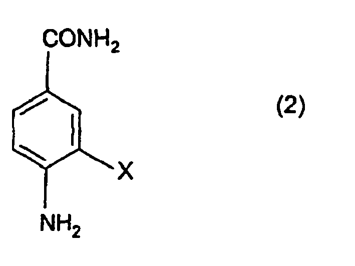 est couplé à un composé de la formule (3)

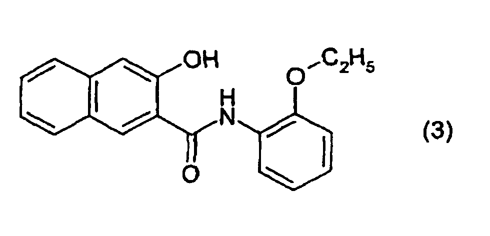

10. Procédé selon la revendication 9, **caractérisé en ce que** l'on mélange l'amide de l'acide 4-amino-1-benzènecarboxylique et au moins une amine de la formule (2) et **en ce que** l'on procède à leur diazotation en commun ou **en ce que** l'on procède à leur diazotation d'une manière séparée et **en ce que** l'on mélange ensuite les sels de diazonium.

11. Procédé en vue de la fabrication de cristaux mixtes selon l'une quelconque des revendications 1 à 8, **caractérisé en ce qu'**au moins une amine diazotée de la formule (2) 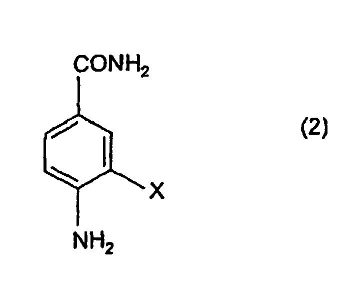 est couplée à un composé de la formule (3) 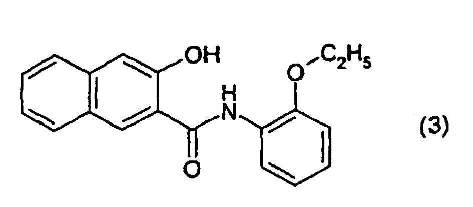 en présence du pigment rouge C.I. 170.

12. Procédé en vue de la fabrication de cristaux mixtes selon l'une quelconque des revendications 1 à 8, **caractérisé en ce que** l'amide diazoté de l'acide 4-amino-1-benzènecarboxylique est couplé à un composé de la formule (3) 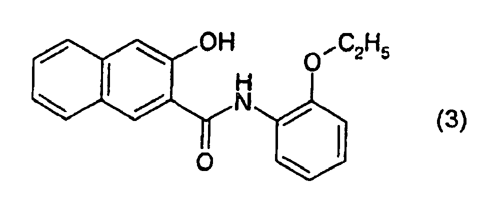 en présence d'au moins un composé de la formule (1)

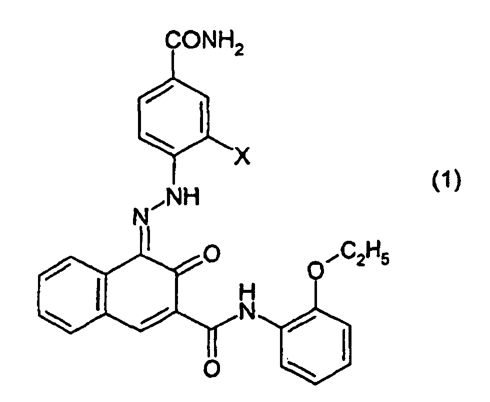

13. Procédé en vue de la fabrication de cristaux mixtes selon l'une quelconque des revendications 1 à 8, **caractérisé en ce que** le pigment rouge C.I. 170 et au moins un composé de la formule (1) sont mélangés ensemble et sont soumis à au moins une des étapes de traitement de pétrissage, mouture, recristallisation, échauffement dans l'eau et/ou dans des solvants, le cas échéant, sous pression.

14. Procédé selon l'une quelconque des revendications 9 à 13, **caractérisé en ce que** l'on effectue au moins une des étapes de procédé dans un micro réacteur.

15. Utilisation de cristaux mixtes selon l'une quelconque des revendications 1 à 8, en vue de la pigmentation de matériaux organiques à poids moléculaire élevé d'origine naturelle ou synthétique.

16. Utilisation selon la revendication 15, en vue de la pigmentation de matières synthétiques, de résines, de vernis, de peintures ou de toners électro photographiques et d'agents de développement, d'encres, d'encres d'impression, de filtres couleurs et de semences.

17. Utilisation selon la revendication 15 ou 16, en vue de la pigmentation de laques pour automobiles.
